# NEW EUROPEAN PATENT SPECIFICATION

(11) **EP 0 647 658 B2**
(45) Date of publication and mention of the opposition decision: **15.03.2006**
(45) Mention of the grant of the patent: 18.11.1998
(21) Application number: 94307163.9
(22) Date of filing: 30.09.1994
(51) Int. Cl.: C08F 6/14, C08F 8/30, C08F 2/38

(54) **Improvements in or relating to ethylene based emulsion polymers**
Verbesserungen in oder in Bezug auf Emulsionspolymeren auf Ethylenbasis
Améliorations rélatives aux polymères en émulsion à base d'éthylène

(30) Priority: 07.10.1993 GB 9320649
(43) Date of publication of application: 12.04.1995
(73) Proprietor: Celanese International Corporation, Dallas, Texas 75234-6034 (US)
(72) Inventor: Fuller, Colin George, Carshalton, Surrey SM5 2EB (GB); Phillips, Michael Robert, South Croydon, Surrey CR2 6HA (GB); Boodaghians, Razmik, Sutton, Surrey SM1 2EA (GB)
(74) Representative: Matthews, Heather Clare

(56) References cited:
- EP-A- 0 438 284
- EP-A- 0 488 605
- AU-A- 3 160 884
- CH-A- 603 732
- US-A- 2 403 465
- US-A- 3 549 589
- US-A- 4 972 013
- PATENT ABSTRACTS OF JAPAN vol. 4, no. 85 (C-15) (567) 18 June 1980 & JP-A-55 048 206 (SUMITOMO KAGAKU KOGYO K.K.) 5 April 1980

## Description

### FIELD OF THE INVENTION

This invention relates to ethylene based emulsion polymers, is emulsion polymers containing ethylene, and which have residual free formaldehyde (is formaldehyde not bound to other components of the polymer) resulting from the polymerisation process, and concerns the reduction of this free formaldehyde, and the use of the emulsion polymers in water based paints.

### BACKGROUND TO THE INVENTION

Formaldehyde is an undesirable by-product present in various emulsion polymers (or polymer latex compositions), generally generated either from reaction of monomers or from sodium formaldehyde sulphoxylate, a reducing agent used in redox polymerisations. Many proposals exist for reduction of free formaldehyde in phenolic resins, using various complexing agents to react with the formaldehyde. Recent patent publications concerning reduction of formaldehyde in emulsion latices have disclosed the use of urea derivatives to reduce the formaldehyde in methylol and N-methylol containing latices: see, e.g., Australian Patent Application 31608/84 and US Patent 5,143,954 (equivalent to EP 488605). Example 1 of the latter document includes data which shows urea is a poor scavenger for formaldehyde in such latices.

US 4972013 discloses a binder composition for a joint compound comprising a polyvinyl alcohol-stabilised vinyl acetate/ethylene copolymer emulsion, to which is added polyethoxylated tallow amine and urea, the latter preferably in an amount of 1 to 3 weight % based on emulsion solids. The urea is added to reduce the large viscosity build up upon ageing that is observed from the combination of the emulsion and ethoxylated tallow amine compound.

### SUMMARY OF THE INVENTION

According to the present invention there is provided a method of making an emulsion polymer containing ethylene, comprising adding urea after, or at a late stage during, the polymerisation process in an amount in the range 0.1 to 1.5% on emulsion weight, at a temperature in the range 25 to 80°C and for a suitable time to reduce free formaldehyde, wherein the polymer comprises vinylacetate and ethylene, and is free or methylol and N-methylol monomers.

The invention also includes within its scope the resulting emulsion polymer.

In a further aspect the present invention provides use of urea to reduce free formaldehyde in an emulsion polymer containing ethylene, by treating the emulsion polymer by addition to urea in an amount in the range 0.1 to 1.5% on emulsion weight, at a temperature in the range 25 to 80°C and for a suitable time to reduce free formaldehyde, and wherein the polymer comprises vinylacetate and ethylene, and is free or methylol and N-methylol monomers. Subject to the limitations of the claims, the invention is applicable to any polymer including ethylene monomer, and such polymers will generally include one or more further monomer materials such as vinyl esters, eg vinyl acetate, formate, propionate, butyrate and isobutyrate, vinyl esters of versatic acids (eg those available from Shell Chemicals under the Trade Mark 'Veova'), vinyl chloride, vinyl silanes, acrylic monomers, eg alkyl acrylates such as 2-ethyl hexyl acrylate, etc, in addition to minor amounts of functional monomers such as sodium vinyl sulphonate, acrylic acid etc. A wide range of such polymers are known and can be envisaged.

The invention finds application to polymers comprising vinyl acetate and ethylene, but free of methylol and N-methylol monomers (which liberate free formaldehyde during polymerisation reaction) in which the main source of free formaldehyde is the reducing agent sodium formaldehyde sulphoxylate. Such polymers are used, eg, as binders in water based paints.

For use as paint binders, emulsion polymers have traditionally been designed to have a minimum film forming temperature (MFFT) of 12 to 20°C, but the introduction of solvent free paints has meant that polymers having an MFFT below 1°C are required. We have found that for polymer latices containing ethylene, which are free of methylol functionality, and have an MFFT below 20°C, post addition of urea can reduce the formaldehyde to acceptable levels. These latices can then be formulated into emulsion paints which are also low in formaldehyde.

Further, there is evidence that a given latex with urea in its formulation can act to reduce the level of formaldehyde which might be present in paint mill base, thereby potentially further reducing the overall formaldehyde content of a finished product. ,

Urea is added at an amount in the range 0.1% to 1.5%on emulsion weight, preferably from 0.2% to 0.8%, eg about eg about 0.5%.

The urea treatment is carried out at elevated temperature, in the range 25°C to 80°C, preferably between 65°C and 75°C for speedy, efficient and economical reaction.

The appropriate reaction time depends on factors including the polymer, the original level of formaldehyde and desired degree of reduction, reaction temperature, and possibly also pH, and can readily be determined by experiment in any given situation. Good results have been obtained with reaction times of about 1 hour at reaction temperatures of about 65°C.

pH is suitably in the range 3.5 to 7.0, preferably 4.0 to 5.5.

The stage at which the urea treatment is carried out does not appear critical, and good results have been obtained with urea added late during the polymerisation process, post polymerisation (ie treatment of an already formulated polymer) or during subsequent use of a polymer, eg during a paint formulation stage. The most efficient and economic timing can be determined by experiment in any given situation.

Investigations indicate that the effect of the urea treatment is not reversible under relevant test conditions.

The emulsion polymers to can be produced in generally conventional manner, as is well known to those skilled in the art. Suitable methods are well characterised in the literature. For example, Polymer Synthesis (Vols I and III) by Sandler & Karo (Academic Press 1974) and Preparative Methods of Polymer Chemistry (2nd Ed) by Sorenson and Campbell (Interscience 1968) provide preparative information. Methoden der Organischen Chemie (Houben-Wey) Band XIV published by George Thieme Verlag Stuttgart (1961) also provides preparative descriptions. Such polymers can be produced by emulsion polymerisation in the presence of water soluble nonionic surfactants in combination with or in place of water soluble anionic surfactants and optionally in the presence of water soluble colloids such as hydroxyethyl cellulose, polyvinyl alcohol or water soluble acrylic resins.

In another aspect, the invention covers a water based paint comprising an emulsion polymer of the invention.

The invention will be further described, by way of illustration, in the following examples.

### Example 1

An emulsion polymer, consisting of a terpolymer of vinyl acetate, ethylene and acrylic monomer was prepared based on a stabilising system of hydroxyethyl cellulose and surface active agents using a redox polymerisation couple of sodium formaldehyde sulphoxylate (in the form of Formosul - Formosul is a Trade Mark) as the reducing agent and sodium persulphate as the oxidising agent. A solution of Natrosol 250LR (1% on monomer) and a alkyl aryl ether sulphate (2% on monomer) was prepared and adjusted to pH 3.5. (Natrosol is the Trade Mark of a grade of hydroxyethyl cellulose). Ferric chloride was added to give 5 ppm of ferric ion on monomer. This solution was loaded to a 4 litre reactor capable of operating under pressure. The reactor was purged twice with nitrogen and once with ethylene to remove air. The reactor was heated to 30°C and 10% of the vinyl acetate and acrylic monomer mixture added, together with all the ethylene. The continuous additions of the remaining monomers over 4 hours and solutions of sodium persulphate and Formosul over 5 hours were commenced. The temperature was allowed to rise to 60°C over the early stages of additions and then held at 60-62°C until the end of additions. The temperature was then reduced to 50°C and t-Butyl hydroperoxide and sodium metabisulphite solutions added as separate streams as a finishing stage. The emulsion polymer was then discharged to a degassing tank to remove any residual ethylene.

The emulsion had a non volatile content of 54.6%, a viscosity of 26.8 poise and a pH of 4.8. The total free formaldehyde content was determined by HPLC and found to be 46 ppm.

1000g of this emulsion was loaded to a reaction vessel equipped with stirrer, reflux condenser and thermometer. The reaction vessel was heated to 25°C and the temperature stabilised. A solution of 5g of urea dissolved in 5g of deionised water was prepared and the solution added to the reaction vessel which was held at 25°C for one hour (Example 1A). A second experiment was performed, but this time at a temperature of 65°C (Example 1B). Both experiments were repeated using only water as the addition (Examples 1C and 1D). The free formaldehyde was then determined by HPLC.

### Analysis of Emulsions for Formaldehyde

2g of the sample to be analysed for formaldehyde is weighed accurately and diluted to 100ml with deionised water. This solution is centrifuged at 20,000 rpm until the polymer has separated. The clear supernatant is filtered and 5ml added to 5ml of Nash reagent (a solution containing 0.002M acetylacetone, 0.5M acetic acid and 2M ammonium acetate). The sample is heated to 40°C and held for 30 minutes. The sample is then analysed using HPLC. The formaldehyde content is calculated using a calibration graph produced using known concentration solutions of formaldehyde. The difference between the urea containing and urea free samples is a measure of the efficiency of the reaction.

### Results

| EXAMPLE | UREA | TEMPERATURE | FORMALDEHYDEPPM |
|---|---|---|---|
| 1A | YES | 25°C | 33 |
| 1B | NO | 25°C | 48 |
| 1C | YES | 65°C | 20 |
| 1D | NO | 65°C | 50 |

These results show that the reaction is more efficient at elevated temperature.

### Optimisation of Reaction

### Example 2

An emulsion polymer, consisting of a terpolymer of vinyl acetate, ethylene and acrylic monomer was prepared as in Example 1 but with 50% of the ethylene added initially and the remainder added over the first three hours of continuous additions. The free formaldehyde content was determined by HPLC and found to be 46 ppm. A 1000 grammes of this emulsion was loaded to a reaction vessel equipped with stirrer, reflux condenser and thermometer. The reaction vessel was heated to 65°C and the temperature stabilised. To the reaction vessel was added 10 grammes of water and the vessel held at 65°C for one hour. The vessel was then cooled to 25°C and the emulsion filtered (Example 2A). The experiment was repeated adding 10g of water containing 2.5g of urea (Example 2B), adding 10g of water containing 5g of urea (Example 2C) and finally adding 10g of water containing 10g of urea (Example 2D). The formaldehyde levels were again determined by HPLC using the method from example 1. The values were redetermined after seven days.

### Results

| EXAMPLE | UREA % o.e.w. | FORMALDEHYDE PPM | |
|---|---|---|---|
| | | INITIAL | 7 DAYS |
| 2A | 0 | 49 | 39 |
| 2B | 0.25 | 29 | 14 |
| 2C | 0.5 | 20 | 7 |
| 2D | 1. | 7 | 6 |

These results show that up to 50 ppm formaldehyde 1% is more efficient than 0.5% initially but that on storage there is no difference. As shown later at higher concentrations of formaldehyde the level of urea for maximum efficiency may need adjustment.

### Example 3

A series of five emulsion polymers containing ethylene were prepared as for Example 1 but containing various comonomers to give a group of polymers at varying MFFTs. Each emulsion was reacted at 65°C for one hour with 0.5% on emulsion weight of urea, added as a 50% aqueous solution (Examples 3A-3E). Control samples of untreated emulsion were also prepared (Examples 3F-3J).

The emulsions used were:-
- Example 3A/F: A terpolymer of vinyl acetate, vinyl chloride, acrylic monomer and ethylene, having an MFFT of 1°C.
- Example 3B/G: A terpolymer of vinyl acetate, vinyl chloride and ethylene, havinf an MFFT of 14°C.
- Example 3C/H: A terpolymer of vinyl acetate, acrylic monomer and ethylene having an MFFT of <1°C.
- Example 3D/I: A terpolymer of vinyl acetate and ethylene having an MFFT of 4°C.
- Example 3E/J: A terpolymer of vinyl acetate, VeoVa, acrylic monomer and ethylene having an MFFT of 1°C.

The formaldehyde levels were again determined by HPLC using the method from Example 1. The values were redetermined after seven days.

### Results

| EXAMPLE | BEFORE REACTION | FORMALDEHYDE PPM | |
|---|---|---|---|
| | | AFTER REACTION | AFTER 7 DAYS |
| 3A | | 63 | 62 |
| 3F | 207 | | |
| 3B | | 28 | 11 |
| 3G | 56 | | |
| 3C | | 7 | 6 |
| 3H | 33 | | |
| 3D | | 33 | 22 |
| 3I | 73 | | |
| 3E | | 72 | 64 |
| 3J | 141 | | |

The above results reinforce the findings that the level of urea needed for effective formaldehyde reduction depends on the initial level in the emulsion as referred to earlier in Example 2.

### Example 4

The inserted emulsions tested in Example 3, together with the unreacted emulsions, were formulated into silk paints using the following formulation:

| | |
|---|---|
| Titanium dioxide pigment | 20 parts |
| Extender pigment | 3 parts |
| Dispersant @ 40% | 1 part |
| Defoamer | 0.15 parts |
| Cellulosic thickener | 0.7 parts |
| Biocide | 0.15 parts |
| Water | 31 parts |
| Emulsion @ 52% | 44 parts |

A sample of the mill base was also prepared without any emulsion being added.

The paints and mill base were tested for formaldehyde content in the same way as for the emulsions in Example 1.

### Results

| EXAMPLE | POLYMER | FORMALDEHYDE PPM |
|---|---|---|
| Mill Base | - | 40 |
| 4A | 3A | 34 |
| 4F | 3F | 114 |
| 4B | 3B | 5 |
| 4G | 3G | 36 |
| 4C | 3C | 5 |
| 4H | 3H | 41 |
| 4D | 3D | 21 |
| 4I | 31 | 60 |
| 4E | 3E | n.a. |
| 4J | 3J | 72 |
| (n.a. indicates result not available.) | | |

The formaldehyde level for the mill base is a function of the raw materials used.

The results show that reduction in the formaldehyde content of the reacted emulsions is mirrored in the paints prepared from them. As can be seen from the above table, the unreacted emulsions show a reduction in formaldehyde level but this is related to the dilution effect in paint manufacture within the experimental determination limits of +/-10%.

### Example 5

A vinyl acetate, vinyl chloride, ethylene, acrylic polymer having an MFFT of 7°C was prepared based on 2% of an anionic surfactant and 1% of hydroxethyl cellulose as the stabilising system using a redox initiation system of sodium persulphate/Formosul at 65°C. A sample of the emulsion was then taken as the control and the bulk of the emulsion reacted for one hour at 70-75°C with 0.75% urea. The bulk of the emulsion was then cooled to room temperature and a sample taken. The formaldehyde level in ppm in the reacted and unreacted samples was then measured with time. The results are given below:-

| | Emulsion without urea | Emulsion with urea |
|---|---|---|
| 36 hours | 114 | 26 |
| 84 hours | | 15 |

Within the accuracy of the equipment used, the formaldehyde levels of the controls remained constant with time.

### Example 6

A similar polymer of that of Example 5 was also prepared at an MFFT of 1°C without vinyl chloride, but including sodium vinyl suphonate as a functional monomer and reacted under the same conditions with 0.5% urea. The results of formaldehyde levels in ppm are given below:-

| | Emulsion without urea | Emulsion with urea |
|---|---|---|
| 36 hours | 118 | 20 |
| 30 days | | 18 |

As with Example 5, the formaldehyde level at the control remained constant with time.

## Claims

1. A method of making, an emulsion polymer containing ethylene, comprising adding urea after, or at a late stage during, the polymerisation process in an amount in the range 0.1 to 1.5% on emulsion weight, at a temperature in the range 25 to 80°C and for a suitable time to reduce free formaldehyde, wherein the polymer comprises vinylacetate and ethylene, and is free or methylol and N-methylol monomers.

2. Use of urea to reduce free formaldehyde in an emulsion polymer containing ethylene, by treating the emulsion polymer by addition of urea in an amount in the range. 0.1 to 1.5% on emulsion weight, at a temperature in the range 25 to 80°C and for a suitable time to reduce free formaldehyde, and wherein the polymer comprises vinyl acetate and ethylene, and is free of methylol and N-methylol monomers.

3. A method or use according to claim 1 or 2, wherein the polymer includes monomer materials selected from vinyl esters including vinyl acetate, formate, propionate, butyrate and isobutyrate, vinyl esters of versatic acids, vinyl chloride, vinyl silanes, acrylic monomers including alkyl acrylates such as 2-ethyl hexyl acrylate, in addition to minor amounts of functional monomers such as sodium vinyl sulphonate, acrylic acid.

4. A method or use according to any one of the preceding claims, wherein the polymer has minimum film forming temperature (MFFT) of below 20°C.

5. A method or use according to any one of the preceding claims, wherein urea is added at an amount in the range 0.2% to 0.8% on emulsion weight.

6. A method or use according to any one of the preceding claims, wherein.the urea treatment is carried out at a temperature in the range 65°C to 75°C.

7. A method or use according to any one of the preceding claims, wherein the urea treatment is carried out for about 1 hour at a temperature of about 65°C.

8. A method or use according to any one of the preceding claims, wherein the urea treatment is carried out at pH in the range 3.5 to 7.0, preferably 4.0 to 5.5.

9. A method or use according to any one of the preceding claims, wherein the urea treatment is carried out late during the polymerisation process, post polymerisation, or during subsequent use of a polymer.

10. A water based paint comprising a polymer in accordance with or produced by the method or use of any one of the preceding claims.

## Revendications

1. Procédé de fabrication d'un polymère en émulsion contenant de l'éthylène, comprenant l'étape d'ajouter de l'urée après le procédé de polymérisation, ou à une étape finale de celui-ci, en une quantité d'environ 0,1 à 1,5% du poids de l'émulsion, à une température d'environ 25 à 80°C et pendant un temps approprié pour réduire le formaldéhyde libre, dans lequel le polymère comprend de l'acétate de vinyle et de l'éthylène, et est exempt de monomères de méthylol et de N-méthylol.

2. Utilisation d'urée pour réduire le formaldéhyde libre dans un polymère en émulsion contenant de l'éthylène, en traitant le polymère en émulsion par addition d'urée en une quantité d'environ 0,1 à 1,5% du poids de l'émulsion, à une température d'environ 25 à 80°C et pendant un temps approprié pour réduire le formaldéhyde libre, et dans lequel le polymère comprend de l'acétate de vinyle et de l'éthylène, et est exempt de monomères de méthylol et de N-méthylol.

3. Procédé ou utilisation selon la revendication 1 ou 2, dans lequel le polymère comprend des matériaux monomère choisis parmi les esters de vinyle, incluant l'acétate, le formiate, le propionate, le butyrate et l'isobutyrate de vinyle, les esters de vinyle des acides versatiques, le chlorure de vinyle, les vinylsilanes, les monomères acryliques incluant des acrylates d'alkyle tels que l'acrylate de 2-éthylhexyle, en plus de petites quantités de monomères fonctionnels tels que le vinylsulfonate de sodium, l'acide acrylique.

4. Procédé ou utilisation selon l'une quelconque des revendications précédentes, dans lequel le polymère a une température minimum de formation de film (TMFF) inférieure à 20°C.

5. Procédé ou utilisation selon l'une quelconque des revendications précédentes, dans lequel on ajoute de l'urée en une quantité d'environ 0,2 % à 0,8 % du poids de l'émulsion.

6. Procédé ou utilisation selon l'une quelconque des revendications précédentes, dans lequel on réalise le traitement à l'urée à une température d'environ 65 °C à 75 °C.

7. Procédé ou utilisation selon l'une quelconque des revendications précédentes dans lequel on réalise le traitement à l'urée pendant environ 1 heure à une température d'environ 65°C.

8. Procédé ou utilisation selon l'une quelconque des revendications précédentes, dans lequel on réalise le traitement à l'urée à un pH dans l'intervalle de 3,5 à 7,0, de préférence de 4,0 à 5,5.

9. Procédé ou utilisation selon l'une quelconque des revendications précédentes, dans lequel on réalise le traitement à l'urée au cours de la fin du procédé de polymérisation, de la post-polymérisation, ou au cours de l'utilisation subséquente du polymère.

10. Peinture aqueuse comprenant un polymère selon le procédé ou l'utilisation, ou produit par le procédé ou l'utilisation selon l'une quelconque des revendications précédentes.

## Patentansprüche

1. Verfahren zur Herstellung eines Emulsionspolymers, das Ethylen enthält, umfassend die Zugabe von Harnstoff nach dem oder in einer späten Phase während des Polymerisationsvorgang(s) in einer Menge im Bereich von 0,1 bis 1,5% des Emulsionsgewichtes, bei einer Temperatur im Bereich von 25 bis 80°C und für eine geeignete Zeit, um freies Formaldehyd zu reduzieren, wobei das Polymer Vinylacetat und Ethylen umfasst, und frei von Methylol und N-Methylolmonomeren ist.

2. Verwendung von Harnstoff, um freies Formaldehyd in einem Emulsionspolymer, das Ethylen enthält, zu reduzieren, durch Behandeln des Emulsionspolymers durch Zugabe von Harnstoff in einer Menge im Bereich von 0,1 bis 1,5% des Emulsionsgewichts, bei einer Temperatur im Bereich von 25 bis 80°C und für eine geeignete Zeit, um freies Formaldehyd zu reduzieren, und wobei das Polymer Vinylacetat und Ethylen umfasst, und frei von Methylol und N-Methylolmonomeren ist.

3. Verfahren oder Verwendung nach Anspruch 1 oder 2, wobei das Polymer Monomermaterialien, ausgewählt aus Vinylestern, einschließlich Vinylacetat, -formiat, -propionat, -butyrat und -isobutyrat, Vinylestern von Versatic®- Säuren, Vinylchlorid, Vinylsilanen, acrylischen Monomeren, einschließlich Alkylacrylaten, wie 2-Ethylhexylacrylat, zusätzlich zu geringeren Mengen funktioneller Monomerer, wie Natriumvinylsulfonat und Acrylsäure, einschließt.

4. Verfahren oder Verwendung nach mindestens einem der vorhergehenden Ansprüche, wobei das Polymer eine MindestFilmbildungstemperatur (MFFT) unter 20°C hat.

5. Verfahren oder Verwendung nach mindestens einem der vorhergehenden Ansprüche, wobei Harnstoff in einer Menge im Bereich von 0,2% bis 0,8% des Emulsionsgewichtes zugesetzt wird.

6. Verfahren oder Verwendung nach mindestens einem der vorhergehenden Ansprüche, wobei die Harnstoffbehandlung bei einer Temperatur im Bereich von 65°C bis 75°C durchgeführt wird.

7. Verfahren oder Verwendung nach mindestens einem der vorhergehenden Ansprüche, wobei die Harnstoffbehandlung für etwa 1 Stunde bei einer Temperatur von etwa 65°C durchgeführt wird.

8. Verfahren oder Verwendung nach mindestens einem der vorhergehenden Ansprüche, wobei die Harnstoffbehandlung bei einem pH im Bereich von 3,5 bis 7,0, vorzugsweise 4,0 bis 5,5, durchgeführt wird.

9. Verfahren oder Verwendung nach mindestens einem der vorhergehenden Ansprüche, wobei die Harnstoffbehandlung spät während des Polymerisationsvorgangs, nach der Polymerisation oder während anschließender Verwendung eines Polymers durchgeführt wird.

10. Anstrichmittel auf Wasserbasis, umfassend ein Polymer, entsprechend oder hergestellt nach dem Verfahren oder der Verwendung nach mindestens einem der vorhergehenden Ansprüche.
